# EUROPEAN PATENT APPLICATION

(11) **EP 1 863 209 A1**
(43) Date of publication of application: **05.12.2007**
(21) Application number: 06300554.0
(22) Date of filing: 02.06.2006
(51) Int. Cl.: H04L 1/00, H04L 27/26

(54) **Channel quality reporting in an orthogonal frequency division multiplexing system**

(71) Applicant: Alcatel Lucent, 75008 Paris (FR)
(72) Inventor: Ballentin, Ralph, 16547 Birkenwerder (DE); Kaminski, Stephen, 73054 Eislingen (DE)
(74) Representative: Schmidt, Werner Karl

(57) **Abstract**

The invention concerns a method for transmitting channel quality indicators in reports of channel quality of a group of subcarriers that is subdivided into at least one subgroup of subcarriers in an orthogonal frequency division multiplexing system from a user terminal (T1-T4) to a base station (BS1-BS8), whereby a channel quality indicator comprises information (RI, RD) that defines the subdivision of the group of subcarriers into subgroups in the next report of channel quality, and channel quality information (QI) for said subgroups in the next report of channel quality is comprised in a channel quality indicator in the next report of channel quality, a base station (BS1-BS8), a user terminal (T1-T4) and a network (CN) therefor.

## Description

The invention relates to a method for transmitting channel quality indicators (CQIs) in an orthogonal frequency division multiplexing (OFDM) system according to the preamble of claim 1, a user terminal according to the preamble of claim 7, a base station according to the preamble of claim 8, and a network according to the preamble of claim 9.

Orthogonal frequency division multiplexing (OFDM) radio systems are currently under discussion in many places as e.g. in Third Generation Partnership Project Long Term Evolution (3GPP LTE) the WiFi standard IEEE 802.11 or the WiMax standard IEEE 802.16.

OFDM is a multi-carrier modulation technique. The data is divided among a large number of closely spaced subcarriers. Several bits of a bit stream are mapped on one subcarrier by modulating the complex amplitude by e.g. QPSK (QPSK = Quadrature Phase Shift Keying), 16-QAM or 64-QAM (QAM = Quadrature Amplitude Modulation).

Frequency-selective resource allocation algorithms such as adaptive modulation, subcarrier allocation and power control can enhance the performance of OFDM downlink systems. In such OFDM based systems with a frequency selective scheduling algorithm, the base station needs sufficient information about the channel quality. According to channel conditions which are reported from the user terminal to the base station, the resources can be optimally distributed to achieve maximal throughput, Therefore the user terminal has to measure the channel conditions, e.g. in the form of a Signal-to-Interference Ratio (SIR) or in the form of a pathloss measurement, at several predefined subcarriers or subcarrier groups. The information about the channel condition is sent from the user terminal to the base station via a feedback channel.

As radio resources are a scarce, the bandwidth used for the feedback of the quality measures has to be limited.

In the European Patent Application EP 1533966 A2, a method for transmitting/receiving channel quality information of subcarriers is disclosed, whereby the subcarriers are grouped into subcarrier groups for which channel quality indicators are generated and transmitted.

In the US Patent Application US 2006/0034244 A1, the entire subchannels are divided into a plurality of groups, a channel quality indicator is generated for each group, and communication parameters are adjusted in accordance with the channel quality indicator. This US Patent application is regarded as the closest prior art.

Up to now the feedback schemes have a rather static behavior in the sense that the channel quality reports are made in a predefined way, which is not appropriate to react on variations of channel conditions or properties of the user terminal.

Thus, such channel quality reports have to take into account the variation of the radio channels and the reasonable granularity of resource blocks for which the quality levels are reported. As such, the reporting scheme shall be able to adapt e.g. to the mobility of the user terminal and the available bandwidth of the mobile radio channel.

The object of the invention is thus to propose a method for transmitting channel quality indicators of a group of subcarriers that takes into account the variation of the radio channels and the reasonable granularity of the frequency blocks for which the quality levels are reported.

This object is achieved by a method according to the teaching of claim 1, a user terminal according to the teaching of claim 7, a base station according to the teaching of claim 8, and a network according to the teaching of claim 9.

The main idea of the invention is to generate a channel quality indicator that comprises information that defines the subdivision of a group of subcarriers into subgroups for the next report of channel quality, and to include channel quality information for said subgroups in a channel quality indicator in the next report of channel quality.

Such an information that defines the subdivision can e.g. be the number of subgroups in the next report of channel quality, or said information defines which at least one subgroup is subdivided in the next report of channel quality.

Further developments of the invention can be gathered from the dependent claims and the following description.

In the following the invention will be explained further making reference to the attached drawings.
Fig. 1 schematically shows a network in which the invention can be implemented.
Fig. 2 schematically shows exemplarily the structure of a channel quality indicator according to the invention.
Fig. 3 schematically shows exemplarily three consecutive reports of channel quality for three groups of subcarriers according to the invention.
Fig. 4 schematically shows exemplarily several CQI frames each assigned to one out of two reporting phases according to the invention.

A network in which the invention can be implemented comprises user terminals and base stations.

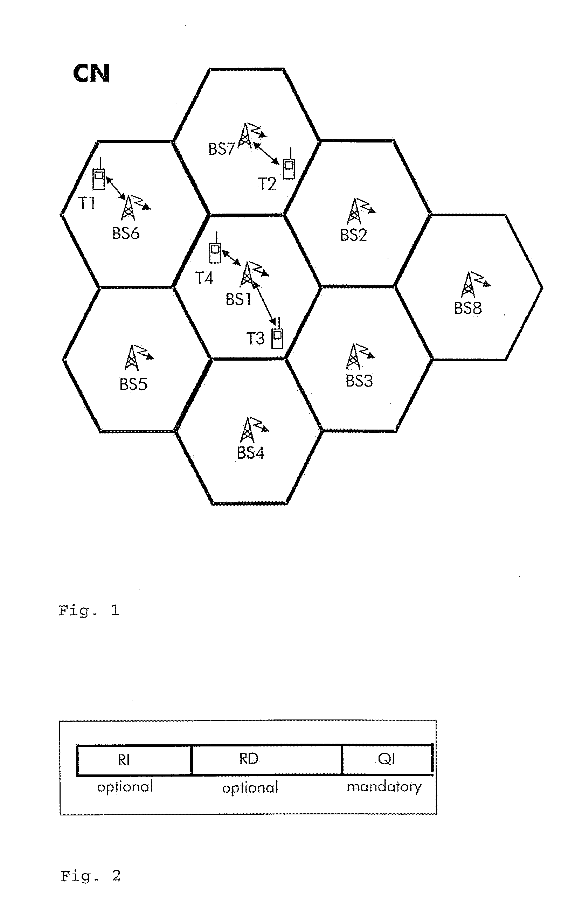

Fig. 1 shows an example for such a network CN that comprises base stations BS1-BS8 and user terminals T1-T4.

Each of said user terminals T1-T4 is connected to one or multiple of said base stations BS1-BS8, which is symbolized by double arrows in fig. 1. The base stations BS1-BS8 are in turn connected to a core network, which is not shown in fig. 1 for the sake of simplicity.

The user terminals T1-T4 comprise the functionality of a user terminal for transmission and reception in a network using OFDM transmission.

Furthermore, a user terminal T1-T4 according to the invention for usage in an orthogonal frequency division multiplexing system with at least one group of subcarriers that is subdivided into at least one subgroup of subcarriers comprises at least one processing means, whereby said at least one processing means is adapted to perform transmission of channel quality indicators in a report of channel quality that comprises information (RI, RD) that defines the subdivision of at least one of said at least one group of subcarriers into subgroups in the next report of channel quality, and is adapted to perform transmission of channel quality indicators in the next report of channel quality comprising channel quality information (QI) for said subgroups in the next report of channel quality.

The base stations BS1-BS8 comprise the functionality of a base station of a network using OFDM transmission, i.e. they provide the possibility for user terminals to get connected to said network and for data exchange of said user terminals by means of OFDM transmission.

Furthermore, a base station BS1-BS8 according to the invention in an orthogonal frequency division multiplexing system with at least one group of subcarriers that is subdivided into at least one subgroup of subcarriers comprises at least one processing means, whereby said at least one processing means is adapted to perform reception of channel quality indicators in a report of channel quality that comprises information (RI, RD) that defines the subdivision of at least one of said at least one group of subcarriers into subgroups in the next report of channel quality, is adapted to perform reception of channel quality indicators in the next report of channel quality comprising channel quality information (QI) for said subgroups in the next report of channel quality, and is adapted to perform distribution of radio resources based on said channel quality indicators.

For the description of the following preferred embodiment of the invention, it is assumed, that the channel quality indicator has a fixed and predefined length.

Fig. 2 shows the structure of the channel quality indicator which is used for said preferred embodiment and which is sent from a user terminal to a base station. Said channel quality indicator comprises three parts of basic information which are described in the following.

The first information is a refinement information RI, which defines the number of subgroups with equal bandwidths in which one dedicated half of the currently reported frequency band is subdivided for the next report of channel quality. Only for said dedicated half of the currently reported frequency band quality information will be reported in the next report of channel quality. The number of reported subgroups depends on the user terminal radio channel characteristic and the cell bandwidth. This refinement information RI is not present in every report of channel quality and will not be present in the last report of channel quality of a sequence of reports. This last report of channel quality is announced by the contents within the refinement information RI. The value zero can for example be used for the identification that the next report of channel quality will contain the same structure with two quality measures for two subgroups again, whereas the value one then indicates that the next report of channel quality contains three quality measures for three subgroups and will be the last one within this sequence.
- The second information is a quality information QI, which contains the channel quality measure for each reported subgroup in the current report of channel quality. Preferably the quality information QI is an equivalent to the applicable modulation schemes like e.g. quadrature phase shift keying (QPSK) or kinds of quadrature amplitude modulation (QAM) like 16QAM or 64QAM. This information is mandatory and will be present in every report of channel quality.
- The third information is a Refinement Direction RD, which informs the base station, which dedicated half of the currently reported frequency band will be subdivided in the next report of channel quality. This information is important to identify which region of the frequency band is further subdivided especially if quality information values in the current report of channel quality are identical. This information is optional and will not be used in the last report of channel quality of a sequence of reports.

According to the preferred embodiment, in principle two distinct reporting sequences exist: The split phase and the update phase.

within the split phase, the reports of channel quality inherently contain by the above mentioned parameters (refinement information, refinement direction and quality information) the definition of the number and sequence of reports of channel quality within one phase.

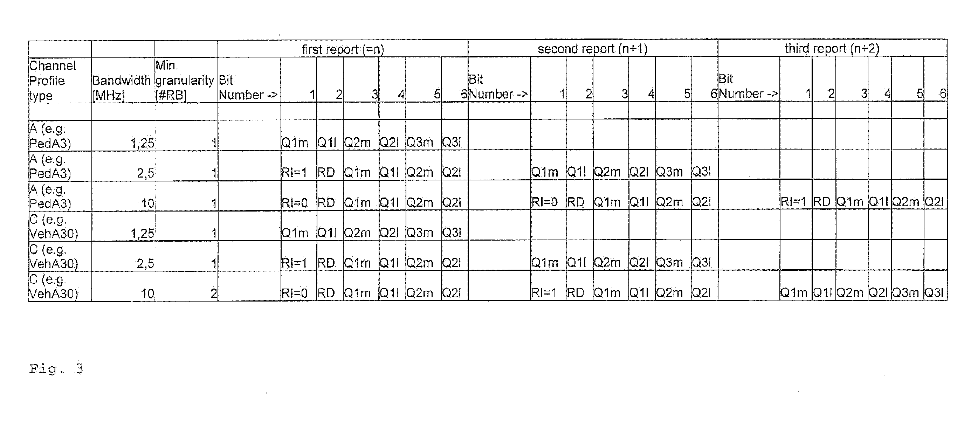

Fig. 3 shows in the form of a table a detailed example of three consecutive reports of channel quality within the split phase under different conditions, i.e. different channel bandwidths and different channel profiles.

For two different channel profile types A and C, as e.g. the so-called pedestrian channel profile PedA3 with a velocity of 3 km/h and the so-called vehicle channel profile VehA30 with a velocity of 30 km/h, three consecutive reports of channel quality are given for each of the three exemplary channel bandwidths 1,25 MHz, 2,5 MHz and 10 MHz that correspond each to a group of subcarriers in an OFDM system.

The minimum granularity in number of resource blocks RB for the respective channel bandwidth in each case is given in column 3. The minimum granularity gives the minimum number of resource blocks RB contained in a subgroup for which a channel quality information is given during the split phase. A resource block comprises a certain number of subcarriers. In, the example a resource block comprises 25 subearriers. An increasing channel bandwidth requires more reports to reach the same granularity of optimally 1 quality measure per resource block RB. Thus the number of consecutive reports of channel quality increases with the channel bandwidth. In the example, a resource block has a bandwidth of 5/12 MHz.

With increasing mobility of a user terminal, the variation of the channel quality is rising, which reduces the possibility of making refinements over time, i.e. the number of consecutive reports of channel quality is limited, and the granularity is coarsening with increasing mobility of the user terminal.

Each report of channel quality comprises 6 bits, each of them being assigned either to a quality information, refinement information RT or refinement direction RD.

The quality information of the subgroup X of the subcarriers is denoted QXm for the most significant bit and QX1 for the least significant bit, i.e. 2 bits will be used for reporting a quality information in the example.

A refinement information RI with a value of 0 means that in the next report of channel quality, one dedicated half of the currently reported frequency band will be subdivided into two subgroups with equal bandwidth. A refinement information RI with a value of 1 means that in the next report of channel quality, one dedicated half of the currently reported frequency band will be subdivided into three subgroups with equal bandwidth.

A refinement direction RD indicates which dedicated half of the currently reported frequency band is subdivided in the next report of channel quality. Only for said dedicated half of the currently reported frequency band quality information will be reported in the next report of channel quality.

There are some general assumptions for the reports of channel quality according to the preferred embodiment depicted in fig. 3:
- There will never be more than one report of channel quality for a channel bandwidth of 1,25 MHz, i.e. channel quality information is sent only once for each of the three resource blocks RB.
- channel bandwidths above 1,25 MHz will at least have one refinement step, i.e. the minimum reporting will be channel quality information for two subgroups of subcarriers in the first report of channel quality and channel quality information for three subgroups of subcarriers in the second report of channel quality.
- The higher the mobility of the user terminal is, the more timing constraints will arise, thus the channels with higher mobility, i.e. higher variation of channel quality, will have shorter reporting sequences, e.g. a user terminal with the channel profile type veb-X120, i.e. a velocity of 120 km/h, (not shown in fig. 3) has in maximum only 2 cansecutive reports of channel quality.

For a user terminal with a channel profile PedA3 and a channel bandwidth of 1, 25 MHz, there is only one report of channel quality, as no subdivision of a channel with a channel band- width of 1,25 MHz is performed, and all 6 bits are used for transmission of channel quality information of three subgroups of subcarriers. As the bandwidth of a resource block is 5/12 MHz in the example, a granularity of 1 is achieved.

For a user terminal with a channel profile PedA3 and a channel bandwidth of 2,5 MHz, in the first report of channel quality, there is sent a refinement information RI of 1 indicating that in the next report, there will be three subgroups reported. Furthermore, in said first report a refinement direction and in 4 bits channel quality information of 2 subgroups is comprised. In the second report, all 6 bits are used for transmission of channel quality information of three subgroups of subcarriers. With these 2 reports, a granularity of 1 is achieved.

For a user terminal with a channel profile PedA3 and a channel bandwidth of 10 MHz, in the first and second report of channel quality, there is sent a refinement information RI of 0 indicating that in the next report, there will be two subgroups reported. Furthermore, in said first and second report a refinement direction and in 4 bits channel quality information of 2 subgroups is comprised. In the third report of channel quality, there is sent a refinement information RI of 1 indicating that in the next report, there will be three subgroups reported. Furthermore, in said third report a refinement direction and in 4 bits channel quality information of 2 subgroups is comprised. In the fourth report, which is not shown in fig. 3, all 6 bits are used for transmission of channel quality information of three subgroups of subcarriers. With these 4 reports, a granularity of 1 is achieved.

The reporting scheme for a user terminal with a channel profile VehA30 and a channel bandwidth of 1,25 MHz corresponds to the reporting scheme for a user terminal with a channel profile PedA3 and a channel bandwidth of 1,25 MHz.

The reporting scheme for a user terminal with a channel profile VehA30 and a channel bandwidth of 2,5 MHz corresponds to the reporting scheme for a user terminal with a channel profile PedA3 and a channel bandwidth of 2,5 MHz.

However, the reporting scheme for a user terminal with a channel profile VehA30 and a channel bandwidth of 10 MHz comprises only three reports of channel quality, whereas the respective user terminal with a channel profile PedA3 and a channel bandwidth of 10 MHz comprises 4 reports of channel quality. The reason for this difference is, that the higher mobility of a user terminal with a channel profile VehA30 compared to a user terminal with a channel profile PedA3 leads to a higher variation of the channel quality which allows only a reduced number of consecutive reports of channel quality.

Within the update phase, where no new information about the subdivision of the group of subcarriers will be necessary and where the bits thus not used for the refinement information RI and the refinement direction RD are used for transmission of additional channel quality information per report of channel quality to gain finer granularity of the quality within frequency bands that were reported with only one quality measure in the split phase.

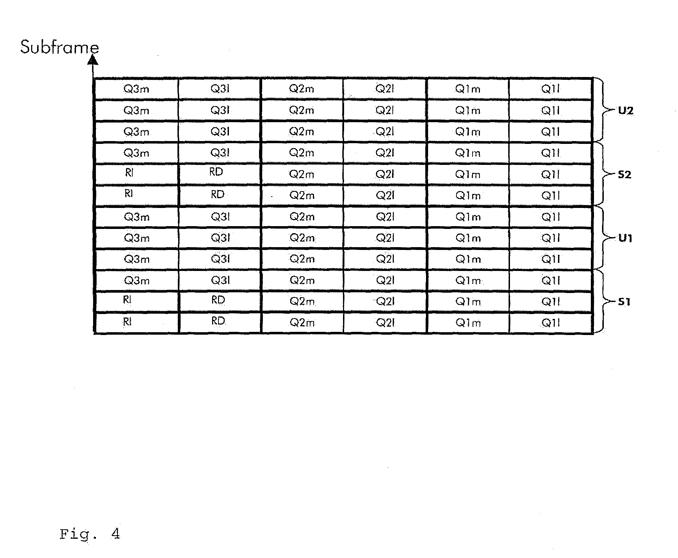

Fig. 4 shows several subframes of reports of channel quality in a chronological order for two split phases S1 and S2 each of them followed by an update phase U1 and U2 respectively, i.e. the sequence of reporting phases is shown.

During each split and update phase, three reports of channel quality are sent, each report of channel quality in turn comprising 6 bits.

In each split phase S1. or S2, the first and second report of channel quality comprises a refinement information RI, a refinement direction RD and 4 bits for the channel quality information of 2 subgroups of subcarriers. In the last report of channel quality, all 6 bits are used for the channel quality information of 3 subgroups of subcarriers .

In each update phase, all 6 bits are used for the channel quality information of 3 subgroups of subcarriers in each of the three reports of channel quality.

Such a channel quality indicator reporting scheme will be used by user terminals that have radio channel conditions, which are stable enough to distribute the reports of channel quality in time, so that the radio channel conditions have not yet changed.

User terminals with radio channel conditions, which are not stable enough, may report the channel quality in less granularity by shorter phases, e.g. consisting of only two reports of channel quality per phase instead of three as depicted in fig. 4 or even in a frequency diverse manner.

In a preferred embodiment of the invention, the number of reports of channel quality that are sent in one subframe depend on the variation of the radio channel condition of the respective user terminal. If said radio channel condition is stable enough, each report of channel quality is sent in a separate subframe. If said radio channel condition is subject to faster variations, two or more reports of channel quality can be sent in a single subframe, so that less subframes are sent in a split or update phase and the time period that is needed for said split or update phase is shortened. In other words, the number of reports of channel quality per subframe and thus the number of subframe per split or update phase is preferably chosen in a way, that the radio channel condition does not change significantly during a split or update phase.

## Claims

1. A method for transmitting channel quality indicators in reports of channel quality of a group of subcarriers that is subdivided into at least one subgroup of subcarriers in an orthogonal frequency division multiplexing system from a user terminal (T1-T4) to a base station (BS1-BS8), **characterized in, that**
• a channel quality indicator comprises information (RI, RD) that defines the subdivision of the group of subcarriers into subgroups in the next report of channel quality,
• and channel quality information (QI) for said subgroups in the next report of channel quality is comprised in a channel quality indicator in the next report of channel quality.

2. A method according to claim 1, **characterized in, that** said information (RI) that defines the subdivision comprises the number of subgroups in the next report of channel quality.

3. A method according to claim 1, **characterized in, that** said information (RD) that defines the subdivision defines which at least one part of the group of subcarriers is subdivided in the next report of channel quality.

4. A method according to claim 1, **characterized in, that** if a channel quality indicator does not announce a subdivision into subgroups for the next report of channel quality, instead of information (RI, RD) that defines the subdivision, additional channel quality information (QI) is sent.

5. A method according to claim 1, **characterized in, that** said channel quality information (QI) contains information about the applicable modulation schemes.

6. A method according to claim 1, **characterized in, that** said information (RI, RD) that defines the subdivision is based on the mobility of the user terminal (T1-T4) or the available bandwidth of the group of subcarriers.

7. A user terminal (T1-T4) for usage in an orthogonal frequency division multiplexing system with at least one group of subcarriers that is subdivided into at least one subgroup of subcarriers **characterized in, that** said user terminal comprises at least one processing means
• adapted to perform transmission of channel quality indicators in a report of channel quality that comprises information (RI, RD) that defines the subdivision of at least one of said at least one group of subcarriers into subgroups in the next report of channel quality,
• and adapted to perform transmission of channel quality indicators in the next report of channel quality comprising channel quality information (QI) for said subgroups in the next report of channel quality.

8. A base station (BS1-BS8) in an orthogonal frequency division multiplexing system with at least one group of subcarriers that is subdivided into at least one subgroup of subcarriers, **characterized in, that** said base station comprises at least one processing means
• adapted to perform reception of channel quality indicators in a report of channel quality that comprises information (RI, RD) that defines the subdivision of at least one of said at least one group of subcarriers into subgroups in the next report of channel quality,
• adapted to perform reception of channel quality indicators in the next report of channel quality comprising channel quality information (QI) for said subgroups in the next report of channel quality,
• and adapted to perform distribution of radio resources based on said channel quality indicators.

9. A network (CN) using orthogonal frequency division multiplexing transmission with at least one group of subcarriers that is subdivided into at least one subgroup of subcarriers **characterized in, that** said network (CN) comprises
• at least one user terminal (T1-T4) comprising at least one processing means adapted to perform transmission of channel quality indicators in a report of channel quality that comprises information (RI, RD) that defines the subdivision of at least one of said at least one group of subcarriers into subgroups in the next report of channel quality and adapted to perform transmission of channel quality indicators in the next report of channel quality comprising channel quality information (QI) for said subgroups in the next report of channel quality,
• and at least one base station (BS1-BS8) comprising at least one processing means adapted to perform reception of channel quality indicators in a report of channel quality that comprises information (RI, RD) that defines the subdivision of one of said at least one group of subcarriers into subgroups in the next report of channel quality, adapted to perform reception of channel quality indicators in the next report of channel quality comprising channel quality information (QI) for said subgroups in the next report of channel quality, and adapted to perform distribution of radio resources based on said channel quality indicators.

## Amended claims

### Amended claims in accordance with Rule 86(2) EPC.

**1.** A method for transmitting channel quality indicators in reports of channel quality of a group of subcarriers that is subdivided into at least two subgroups of subcarriers in an orthogonal frequency division multiplexing system from a user terminal (T1-T4) to a base station (BS1-BS8), whereby channel quality information (QI) for the group of subcarriers is comprised in a channel quality indicator in the current report of channel quality, **characterized in, that**
• the channel quality indicator comprises information (RI, RD) that defines the subdivision of the group of subcarriers into subgroups in the next report of channel quality,
• and channel quality information (QI) for said subgroups in the next report of channel quality is comprised in a channel quality indicator in the next report of channel quality.

**4.** A method according to claim 1, **characterized in, that** said channel quality information (QI) contains information about the applicable modulation schemes.

**5.** A method according to claim 1, **characterized in, that** said information (RI, RD) that defines the subdivision is based on the mobility of the user terminal (T1-T4) or the available bandwidth of the group of subcarriers.

**6.** A user terminal (T1-T4) for usage in an orthogonal frequency division multiplexing system with at least one group of subcarriers that is subdivided into at least two subgroups of subcarriers, whereby said user terminal comprises at least one processing means adapted to perform transmission of channel quality information (QI) for the group of subcarriers in a channel quality indicator in the current report of channel quality, **characterized in, that** said at least one processing means is
• adapted to perform transmission of said channel quality indicator in the current report of channel quality that comprises information (RI, RD) that defines the subdivision of at least one of said at least one group of subcarriers into subgroups in the next report of channel quality,
• and adapted to perform transmission of a channel quality indicator in the next report of channel quality comprising channel quality information (QI) for said subgroups in the next report of channel quality.

**7.** A base station (BS1-BS8) in an orthogonal frequency division multiplexing system with at least one group of subcarriers that is subdivided into at least two subgroups of subcarriers, whereby said base station comprises at least one processing means adapted to perform reception of channel quality information (QI) for the group of subcarriers in a channel quality indicator in the current report of channel quality, **characterized in, that** said at least one processing means is
• adapted to perform reception of said channel quality indicator in the current report of channel quality that comprises information (RI, RD) that defines the subdivision of at least one of said at least one group of subcarriers into subgroups in the next report of channel quality,
• adapted to perform reception of a channel quality indicator in the next report of channel quality comprising channel quality information (QI) for said subgroups in the next report of channel quality,
• and adapted to perform distribution of radio resources based on said channel quality indicators.

**8.** A network (CN) using orthogonal frequency division multiplexing transmission with at least one group of subcarriers that is subdivided into at least two subgroups of subcarriers, whereby said network (CN) comprises
• at least one user terminal (T1-T4) comprising at least one processing means adapted to perform transmission of channel quality information (QI) for the group of subcarriers in a channel quality indicator in the current report of channel quality,
• and at least one base station comprising at least one processing means adapted to perform reception of channel quality information (QI) for the group of subcarriers in a channel quality indicator in the current report of channel quality,
**characterized in, that**
* said at least one processing means of said at least one user terminal (T1-T4) is adapted to perform transmission of said channel quality indicator in the current report of channel quality that comprises information (RI, RD) that defines the subdivision of at least one of said at least one group of subcarriers into subgroups in the next report of channel quality and adapted to perform transmission of a channel quality indicator in the next report of channel quality comprising channel quality information (QI) for said subgroups in the next report of channel quality,
• and said at least one processing means of said at least one base station (BS1-BS8) is adapted to perform reception of said channel quality indicator in the current report of channel quality that comprises information (RI, RD) that defines the subdivision of at least one of said at least one group of subcarriers into subgroups in the next report of channel quality, adapted to perform reception of a channel quality indicator in the next report of channel quality comprising channel quality information (QI) for said subgroups in the next report of channel quality, and adapted to perform distribution of radio resources based on said channel quality indicators.
